**Europäisches Patentamt**

**European Patent Office**

**Office européen des brevets**

(11) Numéro de publication : **0 511 899 A1**

# (12) DEMANDE DE BREVET EUROPEEN

(21) Numéro de dépôt : **92401134.9**

(22) Date de dépôt : **22.04.92**

(51) Int. Cl.$^5$ : **H04N 3/15, H04N 5/225, H04N 5/335**

(30) Priorité : **30.04.91 FR 9105292**

(43) Date de publication de la demande :
**04.11.92 Bulletin 92/45**

(84) Etats contractants désignés :
**DE FR GB IT**

(71) Demandeur : **THOMSON-CSF**
**51, Esplanade du Général de Gaulle**
**F-92800 Puteaux (FR)**

(72) Inventeur : **Joffre, Pascal**
**THOMSON-CSF, SCPI, Cédex 67**
**F-92045 Paris la Défense (FR)**
Inventeur : **Remy, Bertrand**
**THOMSON-CSF, SCPI, Cédex 67**
**F-92045 Paris la Défense (FR)**

(74) Mandataire : **Turlèque, Clotilde et al**
**THOMSON-CSF SCPI**
**F-92045 PARIS LA DEFENSE CEDEX 67 (FR)**

(54) **Dispositif de microbalayage, caméra infrarouge équipée d'un tel dispositif et procédé de fabrication de ce dispositif.**

(57)    L'invention concerne un dispositif de micro-balayage destiné à dévier périodiquement un flux lumineux collimaté.

Le dispositif selon l'invention est constitué d'au moins un disque (D1) ou (D2), de rayon r, d'épaisseur (e) ou d'indice (n) variable le long de sa circonférence, le disque tournant à vitesse constante. L'épaisseur (e) ou l'indice (n) varie de manière à provoquer un balayage linéaire.

L'invention concerne également un procédé de réalisation d'un tel dispositif par gravure, par photogravure ou par dopage ionique.

Application aux détecteurs IR de type mosaïque pour caméra thermique.

FIG.2

L'invention concerne le domaine de la détection infrarouge et a pour objet un dispositif de microbalayage destiné notamment à équiper une caméra d'observation infrarouge et un procédé de fabrication d'un tel dispositif.

La détection infrarouge utilise le flux infrarouge émis par un corps en fonction de sa température, une telle dépendance obéissant à la loi de Planck. Cette détection s'opère dans la pratique dans les bandes spectrales 3 à 5 $\mu$m et/ou 8 à 12 $\mu$m correspondant aux fenêtres de transmission atmosphériques. Les caméras utilisées pour former des images à partir d'une telle détection font intervenir une chaîne optronique de différents éléments comprenant : un système optique afocal de réception du flux de lumière provenant de la scène à observer, un objectif pour la formation d'une image de cette scène sur un détecteur constitué de surfaces élémentaires sensibles dans la ou les fenêtres de transmission infrarouge et disposé dans le "plan froid" d'un cryostat pour analyser l'image formée par le système optique, un système de balayage optique selon une ou deux directions disposé entre le système afocal d'entrée et l'objectif, pour analyser l'image formée lorsque la surface photosensible du détecteur est un détecteur de première génération de type mosaïque élémentaire ou barrette composée de quelques surfaces photosensibles élémentaires, et un ensemble électronique de lecture et de traitement des signaux délivrés par le détecteur et correspondant aux flux élémentaires de lumière reçus par les surfaces photosensibles élémentaires afin de constituer un signal de visualisation.

L'évolution actuelle de la technologie tend à utiliser des détecteurs de deuxième génération de type mosaïque bidimensionnelle dite "surfacique Plan-Focal" (ou F.P.A. initiales de "Focal Plane Array" en terminologie anglo-saxonne) permettant de supprimer le balayage optique. De tels détecteurs sont associés à des circuits à multiplexage et lecture de charges intégrés, tels que les circuits CCD (Circuit à Transfert de Charges) ou CID (Circuit à Injection de Charges).

Mais, avec de telles mosaïques bidimensionnelles, la résolution de l'image visualisée dépend fortement de l'organisation des zones de sensibilité et, en particulier de la présence de zones non sensibles entre les surfaces photosensibles élémentaires carrées ou rectangulaires disposées régulièrement. A titre d'exemple, sur une mosaïque de 128 x 128 pixels sensibles dans la bande 3 à 5 $\mu$m, les surfaces photosensibles n'occupent qu'environ 25 % de la surface totale de la mosaïque. Ainsi les mosaïques de détection actuelles laissent apparaître une "trame" aveugle constituée par les espaces séparant les surfaces photosensibles élémentaires disjointes.

Afin de supprimer cet effet de trame, un microbalayage par vibration d'une lame à faces parallèles a déjà été proposé, par exemple dans le brevet EP-289182, l'image à analyser vibrant alors sur le plan de détection de façon à obtenir une continuité spatiale de la détection. Cette solution entraîne rapidement un effet de flou d'image du fait des effets engendrés par la vibration (déréglage, usure accélérée, ... ).

Pour pallier les inconvénients évoqués, et notamment pour s'affranchir de l'effet de trame aveugle et augmenter le nombre de pixels dans l'image finale par rapport au nombre de surfaces photosensibles élémentaires, sans introduire de flou, la présente invention propose un dispositif de microbalayage par rotation d'un élément présentant des caractéristiques physiques propres à dévier périodiquement le flux lumineux incident suivant 1 ou 2 directions de façon à obtenir une continuité de détection de toute la surface du détecteur.

Plus précisément, l'invention concerne un dispositif de microbalayage pour dévier périodiquement la direction d'un faisceau lumineux à l'entrée de ce dispositif et émergeant de celui-ci selon une direction déviée, caractérisé en ce qu'il comporte au moins un élément tournant autour d'un axe parallèle au faisceau incident et dont la rotation provoque la déviation périodique du faisceau émergeant.

L'invention concerne également une caméra infrarouge d'observation comportant un tel dispositif de microbalayage et un procédé de fabrication de ce dispositif de microbalayage.

D'autres caractéristiques et avantages apparaîtront à la lecture de la description qui suit, en référence aux figures annexées représentant, respectivement :

- les figures 1a à 1b, deux exemples d'implantation du disque tournant selon l'invention interceptant respectivement un faisceau incident collimaté et un faisceau incident convergent ;
- la figure 2, un exemple de structure du disque tournant selon l'invention ;
- la figure 3, un chronogramme représentant la variation de l'amplitude du microbalayage en fonction du temps ;
- la figure 4, un exemple de réalisation selon l'invention d'un circuit de traitement électronique du signal fourni par un détecteur mosaïque ;
- la figure 5, un exemple schématique de réalisation en vue de dessus d'un dispositif de microbalayage à deux disques pour un balayage deux axes selon l'invention ;
- la figure 6, l'exemple de réalisation précédent en vue de face selon la coupe AA' de la figure 5.

La figure 1a illustre un exemple d'implantation d'un élément tournant selon l'invention dans une caméra d'observation infrarouge. Un faisceau d'entrée FE provenant de la scène observée est collimaté à l'infini en traversant un système optique afocal d'entrée 1, constitué schématiquement de deux lentilles L1 et L2. En sortie du système optique 1, un faisceau FI, conjugué optique du faisceau FE, est projeté sur un détecteur infrarouge 2, du type mosaïque bidimensionnelle, par passage à travers un objectif de focalisation 3. Dans cet exemple, un élément tournant D1 est interposé dans le faisceau FI devant l'objectif de focalisation 3, et intercepte donc un faisceau parallèle. Le détecteur 2 comporte des surfaces photosensibles élémentaires formant une matrice sur laquelle est cadrée directement l'image à analyser.

L'élément D1 est entraîné en rotation par l'action d'un moteur M qui peut être avantageusement du type à rotor creux de façon à minimiser son encombrement. La rotation de l'élément D1 imprime au faisceau FI un mouvement de microbalayage horizontal selon une direction Dx sur le détecteur 2, grâce à la déviation variable dans le temps de ce faisceau provoquée par la traversée de l'élément tournant D1. Ainsi, selon l'invention, le microbalayage est assuré par simple rotation d'un élément additionnel, dont la structure sera décrite plus loin, alors que les solutions antérieures sont toute basées sur des éléments en vibration.

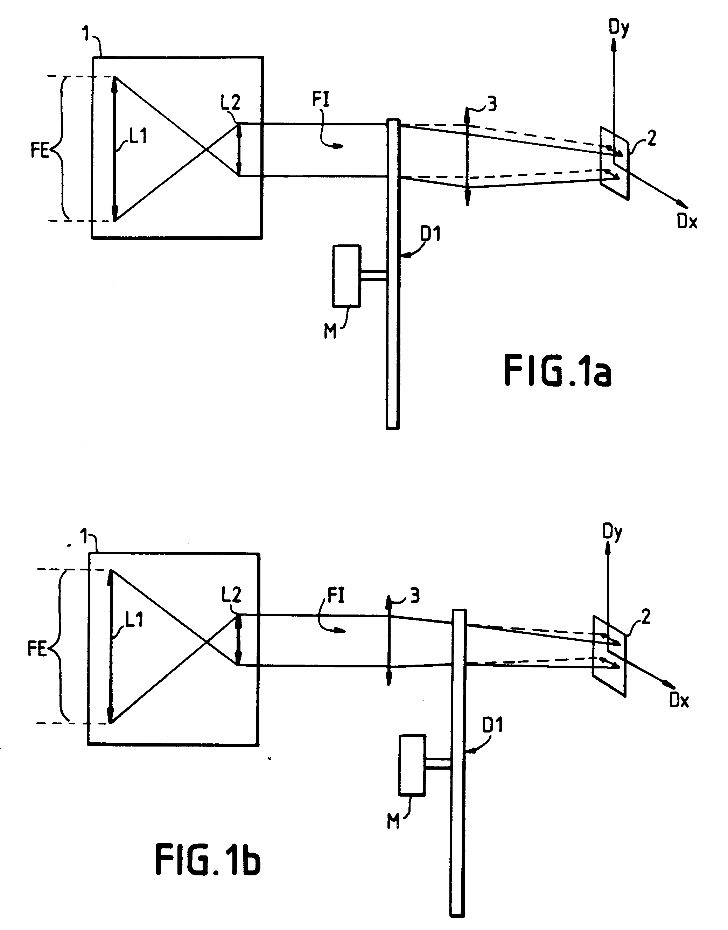

La figure 1b illustre un autre exemple d'implantation où les mêmes éléments ont été désignés par les mêmes références. Le disque tournant D1 intercepte le faisceau FI convergent après traversée de l'objectif de focalisation 3. Le disque D1 est ainsi placé devant le détecteur 2 où la section du faisceau est plus faible. En outre, le calcul montre que la défocalisation provoquée par la rotation de l'élément, dans cet exemple d'implantation, est négligeable par rapport aux dimensions du détecteur.

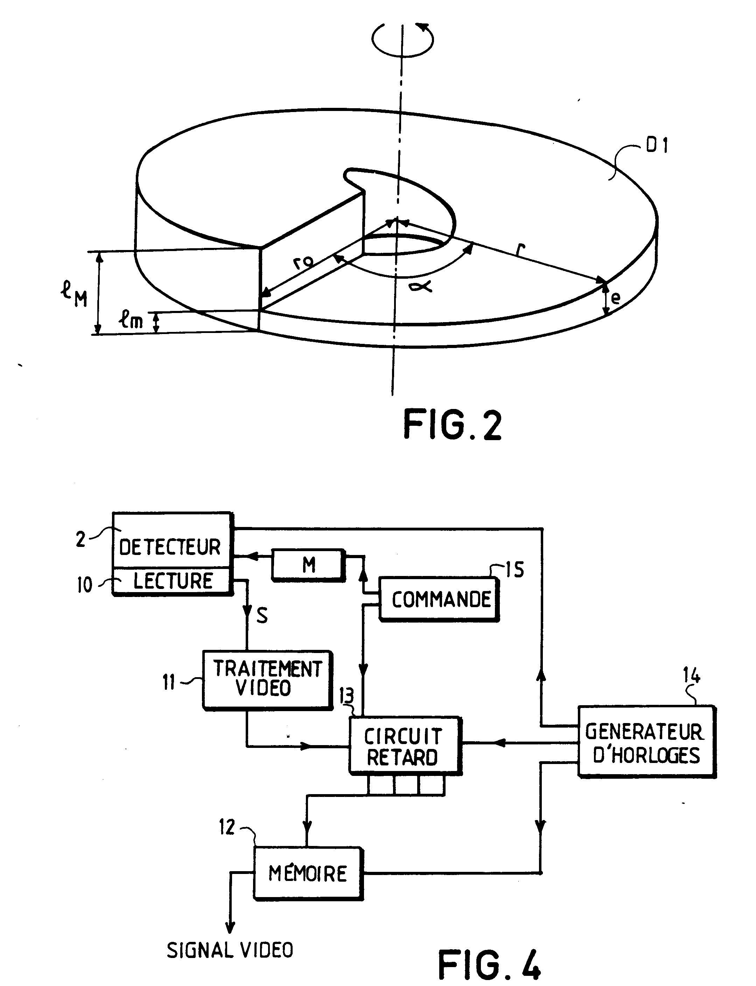

Suivant un premier mode de réalisation de l'élément tournant selon l'invention, tel que représenté sur la figure 2, cet élément se présente sous la forme d'un disque D1 ayant une épaisseur e variable en fonction de la position angulaire $\alpha$ du rayon r repérée par rapport à un rayon de référence $r_o$, e ayant une valeur constante le long d'un même rayon r.

La loi de variation de l'épaisseur e entre les deux valeurs extrémales, $e_m$ et $e_M$ qui correspondent à une discontinuité de surface au niveau du rayon $r_o$, est définie en fonction de la position angulaire du rayon r.

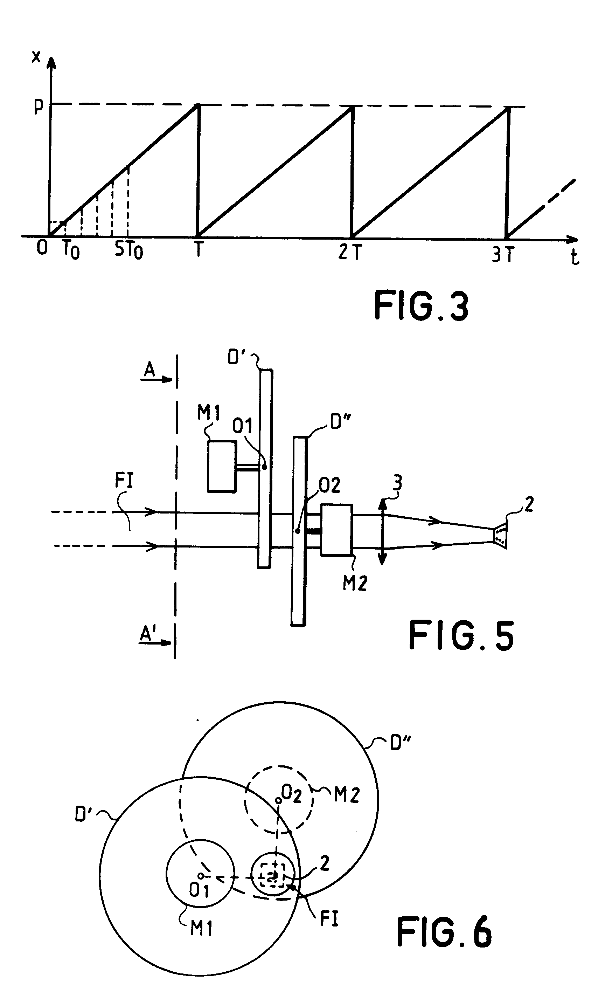

Cette loi de variation, notée e ($\alpha$), est choisie de telle sorte que le microbayalage x du faisceau sur le détecteur, résultant de la rotation du disque à vitesse constante, soit linéaire en fonction du temps selon un profil en dents de scie tel que représenté sur la Figure 3. Pour cela, la déviation angulaire $\theta$ du faisceau doit être proportionnelle à la position angulaire de la portion du disque interceptant le faisceau :

$$\theta = \theta_{max} \cdot \frac{\alpha}{2\pi}$$

Or, l'angle de déviation $\theta$ s'exprime en fonction du gradient d'épaisseur n de/d$\alpha$ , à indice n du disque supposé constant (ou d(e.n)/d$\alpha$ , si n varie) du fait de l'effet de prisme du disque :

$$\theta = \frac{1}{R}\eta\frac{de}{d\alpha} \text{ (à l'indice n constant)}$$

où R est la distance entre l'axe optique du faisceau avant déviation et l'axe du disque (approximativement égal au rayon du disque).

Un calcul élémentaire d'intégration montre alors que la loi de variation e ($\alpha$) est de type parabolique :

$$e (\alpha) = R. \frac{\theta max}{4\Pi n} \cdot \alpha^2$$

L'exemple de chronogramme du microbalayage présenté sur la figure 3 est celui du déplacement virtuel x du détecteur en fonction du temps ; ce déplacement est dit virtuel car, en réalité, ce n'est pas le détecteur mais l'image analysée qui se déplace. Dans l'exemple de chronogramme présenté, la loi de balayage est la répétition d'une fonction linéaire élémentaire avec une période égale à la période de rotation T du disque.

L'amplitude maximale de microbalayage dans le plan du détecteur, correspondant à la déviation maximale $\theta_{max}$ étant égale au pas p de la mosaïque de surfaces photosensibles élémentaires dans la direction Dx, la fonction linéaire élémentaire du déplacement virtuel x est :

$$x = p \cdot \frac{t}{T}$$

où p est égal à $\theta_{max}$.f, f étant la distance focale de l'objectif 3 et t l'instant considéré, compris entre O et T à kT près. Typiquement, pour un détecteur infrarouge de type à transfert de charges CCD, p = 50 à 100 µm.

Le rapport entre la période T de rotation, qui commande la vitesse de rotation du disque, et la période d'échantillonnage (To) des signaux issus du détecteur définit le nombre N (N = T/To) de pixels intermédiaires entre deux surfaces photosensibles successives selon une direction donnée, par exemple horizontale dans l'exemple de réalisation. Il est à noter que le nombre N est limité par l'effet de dispersion dû à l'étendue du faisceau incident FI dont tous les rayons ne sont pas exactement déviés du même angle. Pour rendre ce phénomène de dispersion négligeable, le rayon du disque doit être supérieure à la valeur minimale $R_{min}$= N∅/2Π, ∅ étant le diamètre du faisceau FI.

A chaque position réelle ou virtuelle du détecteur, il est nécessaire de resynchroniser temporellement le signal détecté de manière à reconstituer un signal vidéo apte à visualiser une trame d'image complète. Pour ce faire, le circuit de traitement vidéo du signal détecté est complété par un sélecteur de retard ayant un nombre de sorties adapté. Plus précisément, la figure 4 représente l'ensemble du traitement électronique du signal de sortie S du registre de lecture à décalage 10 du détecteur 2 destiné à former un signal vidéo à partir du signal S. Après traitement par le circuit de traitement vidéo 11, le signal vidéo est appliqué à une mémoire 12 par l'intermédiaire d'un circuit retard 13 comportant un sélecteur couplé à plusieurs lignes à retard avec autant de sorties (4 dans l'exemple représenté) ; la mémoire 12 est lue en synchronisme avec le registre de lecture 10 grâce à un générateur d'horloges 14 qui fournit également des impulsions de commande au sélecteur du circuit retard, recevant également des informations relatives à la position angulaire du microbalayage par couplage à la commande 15 du moteur d'entraînement M. Pour une position donnée du détecteur, le signal vidéo correspondant est donc recalé dans le temps, au moment adéquat, déclenché par le générateur d'horloges 14, et par l'intervention de la ligne à retard adéquate, commandée par le sélecteur du circuit retard 13 en fonction précisément de cette position.

Finalement, la mémoire 12 est lue avec une période adaptée pour constituer un signal vidéo au standard TV correspondant.

Un deuxième mode de réalisation de microbalayage par rotation selon l'invention est décrit ci-après. Dans cette version, la déviation angulaire n'est plus obtenue par variation d'épaisseur mais par création d'un gradient d'indice dans un disque tournant d'épaisseur constante. Comme dans le cas du disque à épaisseur variable, l'indice n du disque à gradient d'indice varie le long de la circonférence et est constant le long d'un rayon.

La loi de variation va donc s'exprimer, en fonction de l'angle $\alpha$, d'une façon analogue à la loi de variation de l'épaisseur du disque du premier mode de réalisation :

$$n = \frac{\theta_{max} \cdot R}{4\Pi e} \alpha^2$$

Le disque à gradient d'indice peut être implanté de façon à intercepter un faisceau incident parallèle ou convergent comme dans le cas du disque à variation d'épaisseur. Dans le cas de l'interception d'un faisceau convergent, un calcul simple montre que la défocalisation provoquée est également faible par rapport aux dimensions usuelles des détecteurs.

Le procédé de fabrication du disque tournant décrit précédemment concernant le premier mode de réalisation consiste à balayer radialement le disque à l'aide d'une pointe diamant à vitesse élevée et à régler la pression de la pointe et la vitesse de rotation du disque de façon à obtenir le profil d'épaisseur souhaité. Le matériau usiné peut être, par exemple, un disque de germanium ou un autre matériau transparent dans l'infrarouge, la variation d'épaisseur à atteindre étant de l'ordre de 100 $\mu$m. Cette technique permet d'obtenir des profils d'épaisseur variable selon 2 directions radiale et circonférentielle, afin d'obtenir un microbalayage combiné selon deux axes orthogonaux, horizontal/vertical. Dans ce but la loi de pression de la pointe diamant détermine la profondeur gravée.

La gravure photochimique sur GaAs (arséniure de gallium ou Ge (germanium) peut également être utilisée. Cette technique permet d'obtenir de la même manière des profils d'épaisseur variable selon 2 dimensions, radiale et circonférentielle, afin d'obtenir un microbalayage combiné horizontal/vertical. Dans cette perspective, la loi d'éclairement du disque à photograver est générée par un masque radial dont la transmittance en chaque point détermine la profondeur gravée.

Notons également que le verre fluoré peut être facilement moulé à chaud : des disques à variation d'épaisseur voulue peuvent donc être obtenus par pressage à chaud dans un moule.

Au lieu de creuser la matière, la variation d'épaisseur peut également être obtenue par dépôt sous vide de matériau sur un substrat d'épaisseur constante : par exemple, du germanium est évaporé sous vide à travers un masque qui limite le dépôt sur pratiquement un rayon d'un disque de germanium pendant la rotation de celui-ci. Afin d'obtenir le profil souhaité, on peut procéder soit à vitesse de dépôt constante et vitesse de rotation de disque ajustée, soit à vitesse de dépôt ajustée et vitesse de rotation constante du disque. Ce procédé peut également permettre d'effectuer un microbalayage selon deux axes, horizontal Dx et vertical Dy : le microbalayage vertical peut en effet être obtenu en réalisant un profil d'épaisseur variable le long d'un rayon grâce à un masque à déplacement radial.

Enfin, pour réaliser un disque à gradient d'indice, la diffusion d'un dopant, par exemple dans un verre fluoré peut être utilisée ; la variation d'indice à atteindre est de l'ordre de 0,1 par millimètre.

La présente invention n'est pas limitée aux modes de réalisation décrits et représentés : en effet, un microbalayage du détecteur selon deux axes, horizontal et vertical peut également être mis en oeuvre par association de deux disques à variation d'épaisseur ou d'indice selon l'invention ayant des vitesses de rotation adaptées à l'aide des moteurs M1 et M2 à commande centralisée pour synchroniser les deux balayages, l'un des disques tournant sensiblement plus lentement que l'autre ;

ces deux disques D' et D" sont alors disposés tels que représentés sur les figures 5 et 6, respectivement en vue de haut et de face selon AA', de telle façon que les rayons qui joignent les centres $O_1$ et $O_2$ des disques D' et D" au centre du faisceau de lumière à dévier FI soient orthogonaux.

D'autre part, pour obtenir un microbalayage deux axes à l'aide d'un seul disque, il peut être avantageux de combiner les techniques de fabrication précédemment décrites d'une part pour un disque à variation d'épaisseur et d'autre part pour un disque à variation d'indice : par exemple photogravure par un masque à transmittance radiale variable d'un disque dopé.

D'autres méthodes de réalisation possibles reposent sur l'utilsation d'un polymère de type polyimide photosensible dont l'épaisseur de couche déposée peut être contrôlée à l'aide d'un masque analogique d'éclairement, comme dans le cas de la photogravure précédemment décrit. Il est alors possible d'obtenir des épaisseurs de quelques dizaines de microns. Des résines photosensibles ou des couches métalliques, épaisses de quelques dizaines de microns, peuvent également être utilisées par gravure sous plasma RIE (initiales de "Reactive Ion Etching", Gravure par Ions Réactifs en terminologie anglo-saxonne) transparent à l'infrarouge. Le champ d'application de l'invention peut avantageusement s'étendre à la compensation des défauts d'uniformité de l'image obtenue à partir d'une caméra thermique, défauts connus pour être liés aux différences de sensibilité entre les surfaces détectrices élémentaires d'une même mosaïque en effet, l'amplitude de microbalayage est suffisante pour que deux surfaces photosensibles voisines "voient" un même point de la scène ; un traitement numérique adapté, dont la mise en oeuvre par des moyens classiques est à la portée de l'homme du métier, compare les niveaux de réponse de ces surfaces voisines au début et à la fin de chaque période de microbalayage, pour établir les coefficients correctifs à appliquer.

## Revendications

1 - Dispositif de microbalayage pour dévier périodiquement la direction d'un faisceau lumineux à l'entrée de ce dispositif et émergeant de celui-ci selon une direction déviée, caractérisé en ce qu'il comporte au moins un élément tournant autour d'un axe parallèle au faisceau incident et dont la rotation provoque la déviation périodique du faisceau émergeant.

2 - Dispositif de microbalayage selon la revendication 1 appliqué à un microbalayage selon deux directions orthogonales, caractérisé en ce qu'il comporte deux disques tournants (D1, D2) ayant chacun une caractéristique physique variant périodiquement avec la rotation du disque correspondant, et en ce que les disques sont placés relativement de sorte que les rayons joignant le centre du faisceau lumineux aux centres (O1, O2) des disques (D1, D2) soient orthogonaux, si bien que la variation des caractéristiques provoquée par la rotation adaptée des disques, commandée par une commande centralisée des moteurs d'entraînement (M1, M2), entraînent une déviation périodique du faisceau lumineux respectivement selon une direction et selon une direction orthogonale.

3 - Dispositif de microbalayage selon les revendications 1 ou 2, caractérisé en ce que l'élément tournant est un disque (D1) transparent au faisceau lumineux entraîné par un moteur (M) et ayant une épaisseur (e) variable le long de sa circonférence et constante radialement,

4 - Dispositif de microbalayage selon les revendications 1 ou 2, caractérisé en ce que l'élément tournant est un disque (D2) transparent au faisceau lumineux, entraîné par un moteur (M) et ayant un gradient d'indice de réfraction le long de sa circonférence et un indice de réfraction constant radialement.

5 - Dispositif de microbalayage selon la revendication 1 appliqué à un microbalayage selon deux directions orthogonales, caractérisé en ce que l'élément tournant est un disque transparent au faisceau lumineux entraîné par un moteur (M) et ayant au moins une caractéristique physique variant périodiquement respectivement le long de la circonférence du disque et le long d'une direction radiale du disque.

6 - Dispositif selon la revendication 5, caractérisé en ce que la caractéristique physique est l'épaisseur (e) du disque et/ou l'indice de réfraction du disque (n).

7 - Dispositif selon l'une des revendications précédentes appliqué à un microbalayage linéaire dans le temps, caractérisé en ce que la loi de variation de la caractéristique physique de l'élément tournant est du type parabolique en fonction de l'angle de rotation.

8 - Caméra thermique comportant un système optique de réception de flux lumineux (1), un système optique de formation d'une image (3) par projection sur un détecteur infrarouge (2) constitué, dans un "plan froid" d'un cryostat, d'une mosaïque de surfaces photosensibles élémentaires associée à un circuit (10) à multiplexage et lecture des charges intégrés, et un circuit de traitement vidéo (11) pour fournir un signal vidéo au standard TV à partir du signal lu, la caméra étant caractérisée en ce que le faisceau lumineux est intercepté par un dispositif de microbalayage selon l'une des revendications précédentes, et en ce qu'un circuit de traitement électronique comporte, couplé au circuit de traitement vidéo (11), un circuit retard (13) composé d'un sélecteur retard associé à plusieurs lignes à retard dont la sortie est appliquée à une mémoire (12) lue en synchronisme avec le registre de lecture (10) grâce à un générateur d'horloges commun (14), ce générateur d'horloges (14) fournissant également des impulsions de commande au circuit retard (13) pour déclencher au moment adéquat un retard de durée sélectionné par le sélecteur en fonction de l'information relative à la position angulaire de l'élément tournant fournie par la commande de cet élément.

9 - Caméra thermique selon la revendication 8, caractérisée en ce que le circuit de traitement électronique comporte également un circuit de compensation des défauts d'uniformité pour comparer les niveaux des signaux obtenus par les surfaces photosensibles élémentaires voisines, respectivement au début et à la fin de chaque période de microbalayage, lorsque lesdites surfaces photosensibles volent la même zone d'image.

10 - Procédé de réalisation d'un dispositif de microbalayage selon la revendication 3, caractérisé en ce qu'il consiste à graver un disque de germanium à l'aide d'une pointe diamant par balayage radial rapide de la pointe sur le disque tournant à vitesse réduite, et à augmenter progressivement sur un tour de rotation la pression exercée sur la pointe de manière à augmenter progressivement la profondeur de la gravure selon le profil souhaité.

**11** - Procédé de réalisation d'un dispositif de microbalayage selon la revendication 4, caractérisée en ce qu'il consiste à doper par diffusion un disque de matière transparente à l'infrarouge et d'épaisseur constante.

**12** - Procédé de réalisation d'un dispositif de microbalayage selon la revendication 6, caractérisé en ce qu'il consiste à photograver un disque réalisé par le procédé selon les revendications 10 ou 11 à l'aide d'un masque à transmittance radiale variable.

FIG.1a

FIG.1b

**FIG. 2**

**FIG. 4**

FIG.3

FIG.5

FIG.6

Office européen
des brevets

**RAPPORT DE RECHERCHE EUROPEENNE**

Numero de la demande

EP    92 40 1134

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | GB-A-2 152 781 (FERRANTI) 7 Août 1985 | 1-6 | H04N3/15 |
| Y | * page 1, ligne 22 - ligne 45 * | 8 | H04N5/225 |
| A | * page 1, ligne 117 - page 2, ligne 48 * | 9 | H04N5/335 |
|   | * page 2, ligne 128 - page 3, ligne 5 * | | |
|   | * page 3, ligne 16 - ligne 31 * | | |
|   | * page 4, ligne 2 - ligne 9 * | | |
|   | * page 4, ligne 91 - ligne 128; figures 2-7 * | | |
|   | --- | | |
| X | US-A-4 994 670 (NOBLE ET AL.) 19 Février 1991 | 1,2,5 | |
| A | * colonne 5, ligne 47 - colonne 6, ligne 14; figures 1,2 * | 3,4,8 | |
|   | --- | | |
| X | EP-A-0 133 890 (BODENSEEWERK) 13 Mars 1985 | 1,5 | |
|   | * page 4, ligne 9 - page 6, ligne 9 * | | |
|   | * page 10, ligne 5 - ligne 17; figures 1,9,10 * | | |
|   | --- | | |
| Y | WO-A-8 606 214 (IRVINE SENSORS) 23 Octobre 1986 | 8 | |
| A | * page 7, ligne 25 - page 8, ligne 5; figure 2 * | 1,9 | |
|   | --- | | |
| A | WO-A-8 802 971 (GURAL) 21 Avril 1988 | 1,8,9 | |
|   | * page 7, ligne 21 - page 8, ligne 16; figures 3,4 * | | **DOMAINES TECHNIQUES RECHERCHES (Int. Cl.5)** |
|   | ----- | | H04N |

Le présent rapport a été établi pour toutes les revendications

| Lieu de la recherche | Date d'achèvement de la recherche | Examinateur |
|---|---|---|
| LA HAYE | 29 JUIN 1992 | DOCKHORN H.S. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
............................................................................................
& : membre de la même famille, document correspondant

EPO FORM 1503 03.82 (P0402)